(19) Europäisches Patentamt
European Patent Office
Office européen des brevets

(11) **EP 4 763 013 A2**

(12) **EUROPEAN PATENT APPLICATION**

(43) Date of publication:
**24.06.2026  Bulletin 2026/26**

(21) Application number: 25224293.8

(22) Date of filing: **17.12.2025**

(51) International Patent Classification (IPC):
**A47J 37/06** (2006.01)    **A47J 36/32** (2006.01)

(52) Cooperative Patent Classification (CPC):
**A47J 37/0641; A47J 36/321**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.12.2024  CN 202411858713**

(71) Applicant: **Ningbo Careline Electric Appliance
Co., Ltd.
Ningbo, Zhejiang 315000 (CN)**

(72) Inventors:
• **LIU, Xingwu
Ningbo City, 315000 (CN)**
• **ZHANG, Yichi
Ningbo City, 315000 (CN)**

(74) Representative: **Meyer-Dulheuer MD Legal
Patentanwälte PartG mbB
Hanauer Landstr. 287-289
60314 Frankfurt am Main (DE)**

(54) **AIR FRYER FOR IMPROVING USER EXPERIENCE**

(57)    The present application relates to an air fryer for improving user experience, which comprises a main body, a main control board and a cooking cavity for holding food are arranged in the main body, and a camera assembly is further arranged in the main body, the camera assembly is electrically connected to the main control board and is used for capturing images of the food in the cooking cavity at intervals, the main control board acquires the captured food images and uploads them to a cloud server, and the cloud server generates a video file based on the food images to display key change points of the cooking process. The present application can automatically identify the type and total amount of food, intelligently control the cooking process of the air fryer, and automatically generate a short video capable of displaying key change points of the cooking process according to user requirements; meanwhile, users can edit and share the automatically generated short video on a terminal device, which greatly improves user experience.

FIG. 1

**Description**

**CROSS REFERENCE TO RELATED APPLICATIONS**

The present disclosure claims priorities to Chinese patent application No. 2024118587131 filed to the China Patent Office on December 17, 2024 and entitled "Air Fryer for Improving User Experience", the entire contents of which incorporated herein by reference.

**TECHNICAL FIELD**

The present disclosure relates to the technical field of intelligent air fryers, in particular to an air fryer for improving user experience.

**BACKGROUND**

Existing air fryers can basically only be controlled through knobs or touch screens on the air fryer. During the operation of the air fryer, the cooking state of food can only be observed by pulling out the fry basket or through the visible window on the fry basket or the main body. It is impossible to view the food cooking state through a mobile terminal, to automatically generate a cooking strategy, or to enable users to participate in the food cooking process, resulting in low intelligence and poor user experience.

**SUMMARY**

In order to solve the above at least one technical problem, the present application discloses the following technical solutions:

An air fryer for improving user experience, comprising a main body, wherein a main control board, a cooking cavity for holding food, and a camera assembly is arranged in the main body; the camera assembly is electrically connected to the main control board and is configured to capture images of the food in the cooking cavity at intervals; the main control board is configured to acquire the captured food images and upload them to a cloud server; and the cloud server generates a video file based on the food images to display key change points of the cooking process.

In one or more embodiments, the shooting time interval of the camera assembly is greater than 2s and less than 8s.

In one or more embodiments, the air fryer further comprises:

local cooking stage recognition unit, configured to obtain the cooking state of the food images by judging the ripeness state of the food in the food images;

local image selection unit, configured to respectively calculating the image similarity between each of the food images and other food images in the cooking stage to which the food image belongs, and dynamically adjusting the importance score of the food image in the cooking stage according to the image similarity, thereby obtaining the food image with the highest importance score in each of the cooking stages as the optimal image;

local video generation unit, configured to arrange all the optimal images in chronological order, generating a video file accordingly.

In one or more embodiments, the importance score is calculated iteratively based on the importance score from the previous iteration and weighted average similarity from the previous iteration, wherein the weighted average similarity is a weighted average of the image similarities between the food image and the other food images in the cooking stage to which the food image belongs, with the importance score of each of the other food images serving as weight respectively.

In one or more embodiments, the step of generating a video file based on the food images to display key change points of the cooking process comprises:

Performing preprocessing on the food images;

Judging the ripeness state of the food in the food images by using a classification model based on a convolutional neural network to obtain the cooking stage of the food images; Respectively calculating the image similarity between each of the food images and other food images in the cooking stage to which the food image belongs, and dynamically adjusting the importance score of the food image in the cooking stage according to the image similarity; Obtaining the food image with the highest importance score in each of the cooking stages as the optimal image;

Arranging all the optimal images in chronological order and generating a video file accordingly. In one or more embodiments, the step of dynamically adjusting the importance score of each food image in each cooking stage according to the image similarity comprises:

Initializing the importance scores of all the food images in the current cooking stage;
Adjusting the image similarity based on the importance scores to obtain weighted similarity, and then iteratively calculating the importance score of each food image based on the weighted similarity;
Executing the next step if the number of iterations reaches a set value and/or the change of the importance score is less than a set threshold; otherwise, returning to the step of adjusting the image similarity based on the importance scores to obtain weighted similarity.

In one or more embodiments, the method further comprises the step of calculating an image quality score based on image definition and color saturation, and adjusting the importance score of the corresponding food image obtained in each iteration by using the image quality score. In one or more embodiments, the cloud server is further used for feeding back information on food ripeness to the main control board according to the cooking stage of the food images, and the main control board ends the cooking process according to the received information.

In one or more embodiments, the cloud server is further used for identifying the type of the food being cooked according to the food images, calculating the food weight by using a volume projection algorithm, then sending the obtained data to the main control board; the main control board sets a menu category, as well as recommended cooking time and cooking temperature according to the food type and the food weight, and displays them through a display screen arranged on the surface of the main body.

In one or more embodiments, the cloud server is further used for sending the generated video file to a mobile terminal for playing and/or forwarding and sharing.

In one or more embodiments, the mobile terminal is further used for performing one or more of operations including editing the title, inserting text, and inserting background music on the received video file.

In one or more embodiments, the mobile terminal is connected to the camera assembly sequentially through the cloud server and the main control board, and is used for viewing the cooking state of the food in the cooking cavity in real time.

The present application also discloses the following technical solutions:
A cloud server, configured for receiving food images uploaded by the air fryer mentioned above, and generate a video file based on the food images to display key change points of the cooking process.

In one or more embodiments, the cloud server comprises:

a cooking stage recognition unit configured to obtain the cooking state of the food images by judging the ripeness state of the food in the food images;
an image selection unit configured to respectively calculating the image similarity between each of the food images and other food images in the cooking stage to which the food image belongs, and dynamically adjusting the importance score of the food image in the cooking stage according to the image similarity, thereby obtaining the food image with the highest importance score in each of the cooking stages as the optimal image;
a video generation unit configured to arrange all the optimal images in chronological order, generating a video file accordingly.

In one or more embodiments, the importance score is calculated iteratively based on the importance score from the previous iteration and weighted average similarity from the previous iteration, wherein the weighted average similarity is a weighted average of the image similarities between the food image and the other food images in the cooking stage to which the food image belongs, with the importance score of each of the other food images serving as weight respectively.

In one or more embodiments, the cloud server further comprises an image quality calculation unit configured to calculate an image quality score based on image definition and color saturation, and to adjust the importance score of the corresponding food image obtained in each iteration by using the image quality score.

In one or more embodiments, the cloud server further comprises an information feedback unit configured for feeding back information on food ripeness to the air fryer according to the cooking stage of the food images.

In one or more embodiments, the cloud server further comprises a food information unit configured for identifying the type of the food being cooked according to the food images, calculating the food weight by using a volume projection algorithm, then sending the obtained data to the air fryer.

In one or more embodiments, the cloud server further comprises a terminal communication unit configured for sending the generated video file to a mobile terminal.

The present application also discloses the following technical solutions:
A cooking system comprises the air fryer mentioned above and the cloud server mentioned above.

In one or more embodiments, the main control board is configured to obtain the food ripeness information sent by the cloud server, and determine whether to end the cooking process based on the received information.

In one or more embodiments, the main control board is configured to obtain the data of the food type and the food weight sent by the cloud server, and set a menu category, as well as recommended cooking time and cooking temperature according to the data obtained, then display the menu category, the recommended cooking time and the cooking temperature through a display screen arranged on the surface of the main body.

The present application also discloses the following technical solutions:
A mobile terminal, configured for obtaining the video file sent by the cloud server mentioned above, and playing and/or sharing the video file.

In one or more embodiments, the mobile terminal is further configured for performing at least one of operations including editing the title, inserting text, and inserting background music on the received video file.

In one or more embodiments, the mobile terminal is connected to the camera assembly sequentially through the cloud server and the main control board, and is used for viewing the cooking state of the food in the cooking cavity in real time.

## BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.

FIG. 1 is a schematic flow chart of the embodiment of the present application.
FIG. 2 is a flow chart of the AIS algorithm of the embodiment of the present application.
FIG. 3 is a flow chart of importance score calculation of the embodiment of the present application.

## DETAILED DESCRIPTION

The present application will be further elaborated below in conjunction with specific embodiments. It should be understood that these embodiments are only used to illustrate the present application and not to limit the scope of the present application. In addition, it should be understood that after reading the content taught by the present application, those skilled in the art can make various changes or modifications to the present application, and these equivalent forms also fall within the scope defined by the appended claims of the present application. The first embodiment of the present application relates to an air fryer for improving user experience, comprising a main body, wherein a main control board and a cooking cavity for holding food are arranged in the main body, and a camera assembly is further arranged in the main body; the camera assembly is electrically connected to the main control board and is used for capturing images of the food in the cooking cavity at intervals; the main control board acquires the captured food images and uploads them to a cloud server; and the cloud server generates a video file based on the food images to display key change points of the cooking process. the cooking process of the air fryer is dynamically monitored in this embodiment, image acquisition is performed in real time, and the images are uploaded to a cloud server for image processing; video processing specifically involves detection of food color, detection of food volume, detection of food type, and short video generation.

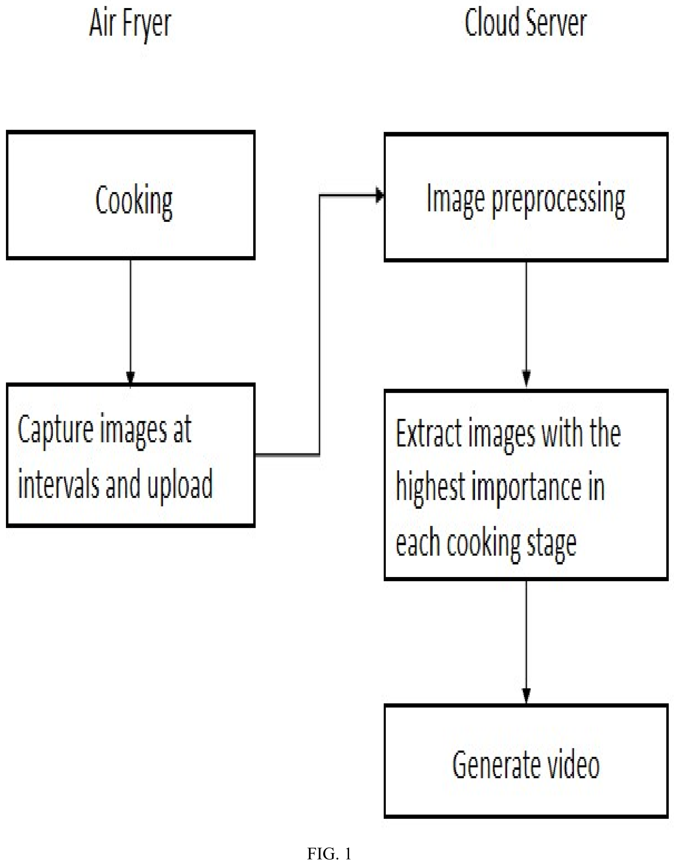

As shown in FIG. 1, after the cooking device is started, image information of the cooking process is collected through a camera, the collected images are uploaded to a cloud server, analyzed after preprocessing, and images capable of displaying key change points of the cooking process are extracted to generate a short video.

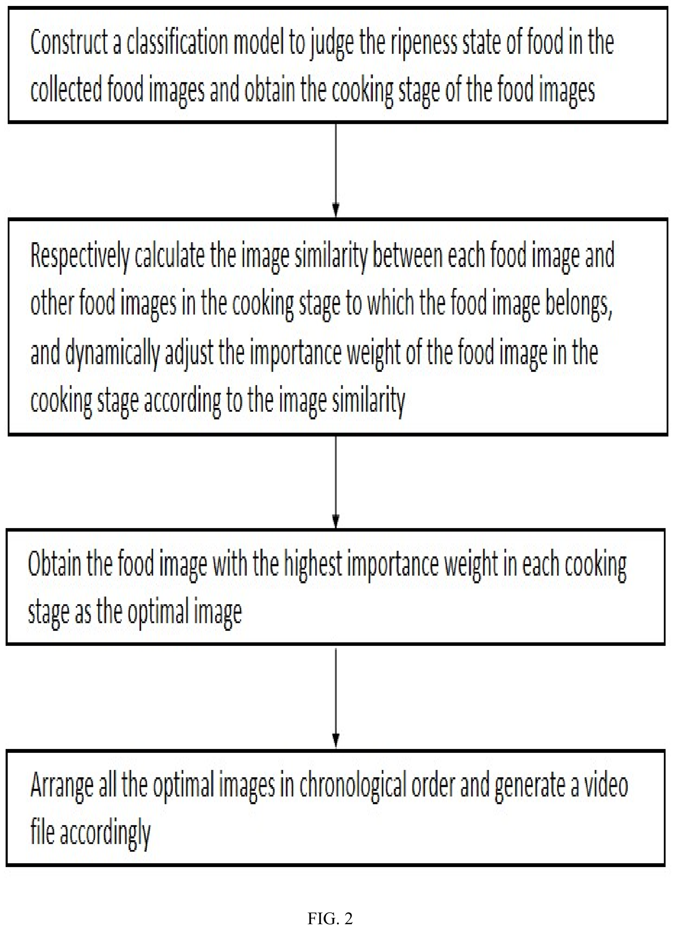

The specific analysis process is shown in FIG. 2, including:

Constructing a classification model to judge the ripeness state of food in the collected food images and obtain the cooking stage of the food images;
Respectively calculating the image similarity between each food image and other food images in the cooking stage to which the food image belongs, and dynamically adjusting the importance score of the food image in the cooking stage according to the image similarity;
Obtaining the food image with the highest importance score in each cooking stage as the optimal image;
Arranging all the optimal images in chronological order and generating a video file accordingly. The above analysis process will be further explained below by taking a classification model based on a convolutional neural network (CNN) as an example. In this embodiment, an Adaptive Importance Scoring (AIS) method is introduced to dynamically adjust the importance scores of representative images in each stage, thereby improving the quality and fluency of the finally synthesized video. The specific steps include:

Step 1: Image Preprocessing

Basic preprocessing steps are performed on all input images by using tools such as OpenCV, including size unification, color space conversion, etc., to prepare for subsequent analysis.

Step 2: CNN Model Training

A CNN model is trained in advance, which is specially used for identifying specific types of food and their cooking states. For example, for roasted chicken legs, a large number of labeled sample data sets can be used to train the model, so that it can learn to judge which stage the chicken legs are in (such as frozen state, thawed state, raw meat state, medium-rare state, rare state, medium state... well-done state) according to appearance features.

Step 3: Application of AIS Algorithm

For each image correctly classified into a specific cooking stage by CNN, the AIS algorithm calculates its importance score relative to other candidate images in the same stage, and this score is comprehensively considered based on multiple factors, such as the degree of difference from other images, image definition, and color saturation. By comparing the importance scores of all candidate images in the same stage, the one with the highest score is selected as the optimal image representing the stage.

Step 4: Short Video Synthesis

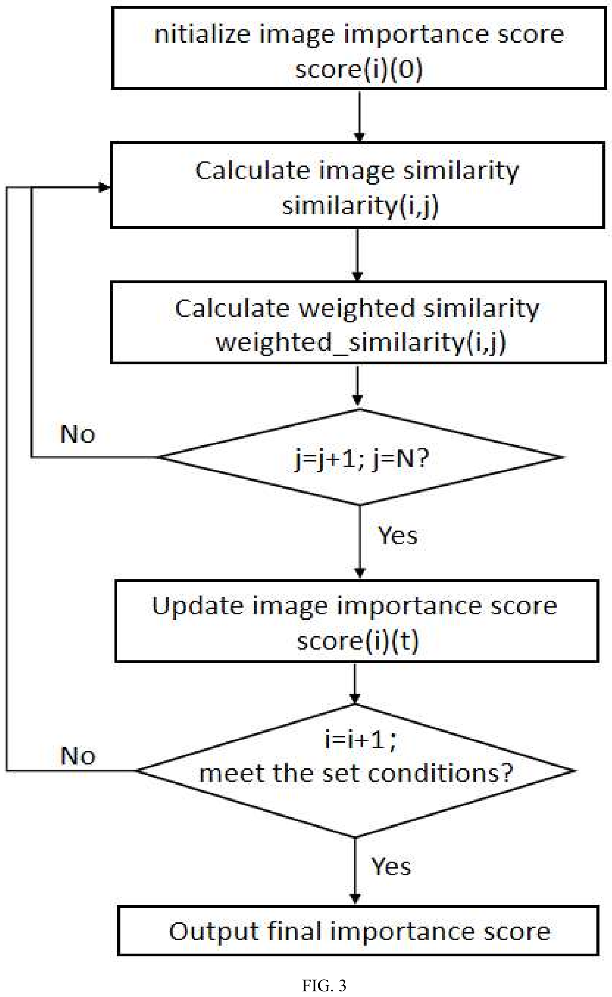

Once the optimal images of each stage are determined, they are connected in chronological order to form a continuously played video segment; in the present application, to ensure the coherence and fluency of the video segment synthesized from images, technologies such as a FLIM frame interpolation model or an image synthesis video algorithm based on OpenCV can be adopted in the video generation process. In addition, users can further add personalized elements (such as titles, text descriptions or background music) to the formed video segment through an APP. As shown in FIG. 3, the core idea of the AIS algorithm in Step 3 is to dynamically adjust the relative importance of each image in its category; first, initialize the importance scores of all images, and then continuously update these values during iteration until convergence. This method provides a novel and effective means to solve the problem of selecting the most suitable images for making short videos from a large number of candidate images, while maintaining high flexibility and being adjustable according to different types of food and application scenarios.

The specific implementation of the AIS algorithm involves several key steps, including initialization, similarity calculation, weight update, and iterative optimization. Several specific implementation modes of the AIS algorithm are given below.

**Embodiment 1**

① Initialization

Input: A set of food images $I = \{I_1, I_2,...,I_n\}$ captured in chronological order.

Output: Importance score $s = \{s_1, s_2,...,s_n\}$ of each image, and all scores are set to the same value initially, for example, $s_i = 1/n$.

(2) Similarity Calculation

To calculate the similarity between any two images, we can adopt feature vector distance technology, that is, extract the feature vector of each image by using a pre-trained convolutional neural network, and then calculate the Euclidean distance or cosine similarity between each pair of images as the similarity score. Then, for each pair of images $(I_i, I_j)$, a similarity score similarity(i, j) is obtained.

③ Weight Update

Based on the formula mentioned above, we can define a weight update rule. In each iteration, the importance score of each image is adjusted according to its average similarity with other images. The specific formula is as follows:

$$score_i^{(t)} = \alpha \times score_i^{(t-1)} + (1 - \alpha) \times \frac{1}{N} \sum_{j=1}^{N} weighted\_similarity\,(i, j)$$

Wherein:

N is the total number of images,

$\mathrm{score}_i^{(t)}$ is the importance score of the i-th image in the t-th iteration,

$\alpha$ is a smoothing parameter set to a value close to 1 (the value range is 0.9<$\alpha$<1, such as 0.95) to ensure that the score change is not too drastic,

similarity (i,j) represents the similarity between image i and image j,

weighted_similarity(i,j) represents weighted similarity, which is combined with the current importance score of the j-th image in each iteration, that is:

$$weighted\_similarity(i,j) = similarity(i,j) \times score_j^{(t-1)}$$

④Iterative Optimization

Set a stop condition: it can be reaching a certain number of iterations (for example, in the air fryer scenario of the present application, the number of iterations t satisfies: t≥10); or the score change is less than a certain threshold; or the two stop conditions are judged at the same time. Execute the loop: repeat the weight update step until the stop condition is met.

⑤ Selection of Optimal Images

After the final scores are determined, select the image with the highest score from each cooking stage as the representative image of the stage.

**Embodiment 2**

① Initialization

Input: A set of food images I = {I$_1$, I$_2$,...,I$_n$} captured in chronological order.
Output: Initialize the importance score s = {s$_1$,s$_2$,...,s$_n$} of each image, and set the initial value as the image quality score quality$_i$, which is comprehensively calculated by considering factors such as image definition and color saturation.

(2) Similarity Calculation

To calculate the similarity between any two images, we can adopt feature vector distance technology, that is, extract the feature vector of each image by using a pre-trained convolutional neural network, and then calculate the Euclidean distance or cosine similarity between each pair of images as the similarity score. Then, for each pair of images (I$_i$,I$_j$), a similarity score similarity(i, j) is obtained.

③ Weight Update

Based on the formula mentioned above, we can define a weight update rule. In each iteration, the importance score of each image is adjusted according to its average similarity with other images. The specific formula is as follows:

$$\mathrm{score}_i^{(t)} = \alpha \times \mathrm{score}_i^{(t-1)}$$

$$+ (1 - \alpha) \times \left( \beta \times \mathrm{quality}_i + (1 - \beta) \times \frac{1}{N} \sum_{j=1}^{N} \mathrm{weighted\_similarity}\,(i,j) \right)$$

Wherein:

N is the total number of images,

$\mathrm{score}_i^{(t)}$ is the importance score of the i-th image in the t-th iteration,

$\alpha$ is a smoothing parameter set to a value close to 1 (the value range is 0.9<$\alpha$<1, such as 0.95) to ensure that the score change is not too drastic,

quality$_i$ is the quality score of the i-th image, which comprehensively considers factors such as image definition and color saturation, and this score is pre-calculated before each iteration,

similarity(i,j) represents the similarity between image i and image j,

weighted_similarity(i, j) represents weighted similarity, which is combined with the current importance score of the j-th image in each iteration, that is:

$$weighted\_similarity(i,j) = similarity(i,j) \times score_j^{(t-1)}$$

④ Iterative Optimization

Set a stop condition: it can be reaching a certain number of iterations (for example, in the air fryer scenario of the present application, the number of iterations t satisfies: t≥10); or the score change is less than a certain threshold; or the two stop conditions are judged at the same time. Execute the loop: repeat the weight update step until the stop condition is met.

⑤ Selection of Optimal Images

After the final scores are determined, select the image with the highest score from each cooking stage as the representative image of the stage.

In the above specific embodiment of the AIS algorithm, image definition refers to the sharpness of edges and details in an image; higher definition means that the object boundaries in the image are clearer and the details are richer, which helps the audience better understand the image content. Specifically, edge detection algorithms such as Laplacian operator or Sobel operator can be used, and then the variance of edge pixels is calculated as the image definition score; the larger the variance, the clearer the image. Color saturation reflects the purity or intensity of colors; high-saturation colors look more bright and vivid, while low-saturation colors look dim and plain; for the display of the cooking process, good color saturation can make food look more appetizing. Specifically, it can be measured in the HSV (hue-saturation-value) color space, or the average value of the saturation channel in the whole image can be calculated as the color saturation score. $quality_i$ can be obtained by directly summing the image definition score and the color saturation score, or by weighted summation of these two indicators to highlight one of the factors of image definition and color saturation.

In one or more embodiments, The camera assembly in this embodiment has an AI recognition function, so the image processing process can be performed on a cloud server or locally. The camera automatically identifies the type of food put into the pot through a large model and an algorithm, calculates the food weight through a volume algorithm, and then automatically controls the cooking temperature and time with one key through the algorithm, saving the trouble of manual key operation; meanwhile, it supports DIY independent setting of cooking temperature and time. The mobile terminal APP is connected to the server, so that remote operation and viewing can be realized, and on-site manual operation is also available. The camera and the camera module can be integrated into one body according to the use space, or can be separated and connected through a copper foil cable.

Taking an air fryer as an example, its control principle is as follows: the switching power supply board provides power for the main control board, the camera module, the heating component, and the motor component; the main control board can be provided with a plurality of function keys to meet the needs of manual control during non-intelligent automatic operation; the main control board unit controls the camera module, the high-precision NTC, the motor component, the heating component, the overheating protection component, and the mechanical protection component according to the communication protocol. The camera adopts a high-pixel image recognition unit, which needs to meet the requirements of temperature resistance and food recognition. The camera module integrates Bluetooth and WIFI functions for device search and networking.

When the power supply is started, the mobile terminal APP is first used to network with the machine; the device can be quickly connected to the APP through WIFI or WIFI hotspot and Bluetooth assistance to add the device. When food is put into the fryer and the automatic cooking function is enabled, the lighting lamp in the fryer cavity is turned on, the camera turns on the recognition function, and through the preset large model and the food feature algorithm, one or more of the following functions are realized:

Identifying the type of food;
Calculating the weight of the food by using a volume projection algorithm;
Identifying features such as color and ripeness of the food.

According to the identified food type and weight, the menu category, cooking time and recommended service temperature can be displayed on the device screen. When the cooking function is started, the device screen can alternately display the remaining cooking time and the current cooking temperature.

In some preferred embodiments, the identified features such as the color of the food can be compared with pre-stored reference features; if they are consistent, it is judged that the food is cooked. At this time, the device stops heating and enters a standby state, and the device interface displays that the food is cooked.

When the user needs to shoot the cooking process, the function is enabled through the display screen interface or the APP terminal; the camera takes photos of the cooking food at an interval of 5 seconds or other intervals, and the photos are uploaded to the cloud server through the network for storage; the user can view the generated photos through the APP.

If a short video needs to be generated, the function can be enabled through the APP interface of the intelligent terminal device; the mobile terminal APP sends an instruction to the cloud server; according to the image sequence, the cloud server compares the features such as the cooking color and ripeness of the food in different stages in the preset large model, and by virtue of the advantages of high-speed calculation and image processing of the cloud server, excludes blurred images or images inconsistent with the preset features, selects images with high definition and consistent with the preset features of the intermediate stages of the process, and performs short video synthesis calculation through the frame extraction function of the cloud server.

Users can independently edit the title of the short video, insert text or background music on the mobile APP terminal. Users can also select the synthesized video duration; the instruction sent by the user on the APP terminal is sent to the cloud server, and the cloud server selectively extracts frames to synthesize a video of the corresponding duration according to the number of photos and the video duration. The corresponding video can be downloaded to the mobile APP terminal for sharing through the network, or stored on the cloud server terminal for link sharing. During the cooking process, the camera real-time viewing function can be turned on through the intelligent terminal APP to view the cooking state and color of the food in the pot in real time. In addition, an intermittent photo-taking mode for food can be adopted, and the photos are uploaded to the cloud server; the cloud server extracts frames to synthesize a short video, which saves cloud storage space and network bandwidth compared with directly shooting a video by the camera and uploading it to the server and downloading it, has low use cost, and reduces requirements on the camera, processor and the like.

**Industrial Applicability**

The present application captures images of food in the cooking cavity of the air fryer at intervals by adding a camera, uploads the food images to a cloud server for processing and recognition to obtain the food state, further intelligently controls the cooking process according to the food state, and automatically generates a short video capable of displaying key change points of the cooking process and sends it to a terminal device according to user requirements; meanwhile, users can edit, forward and share the automatically generated short video on the terminal device, which greatly improves user experience, the cloud server extracts frames to synthesize a short video, which saves cloud storage space and network bandwidth compared with directly shooting a video by the camera and uploading it to the server and downloading it, has low use cost, and reduces requirements on the camera, processor and the like. when generating the short video, the present application dynamically adjusts the weight of each image in the same cooking stage according to image similarity, and updates the image similarity by using the image weight, calculates the final image weight after multiple iterations, and finally combines a plurality of images with the highest weight into a short video, so that the generated short video can better display key change points in the cooking process; the present application also automatically identifies the food type and total amount through the cloud server, further generates a menu category, as well as recommended cooking time and cooking temperature and displays them, improving the intelligence of the air fryer.

**Claims**

1. An air fryer for improving user experience, **characterized by** comprising a main body, wherein a main control board, a cooking cavity for holding food, and a camera assembly is arranged in the main body, the camera assembly is electrically connected to the main control board and configured to capture images of the food in the cooking cavity at intervals, and the main control board is configured to acquire the captured food images and upload them to a cloud server.

2. The air fryer according to claim 1, **characterized in that** the shooting time interval of the camera assembly is greater than 2s and less than 8s.

3. A cloud server, **characterized in that** the cloud server is configured for receiving food images uploaded by the air fryer according to claim 1, and generating a video file based on the food images to display key change points of the cooking process.

4. The cloud server according to claim 3, **characterized by** comprising:

    a cooking stage recognition unit, configured to obtain the cooking state of the food images by judging the ripeness state of the food in the food images;

an image selection unit, configured to respectively calculate the image similarity between each of the food images and other food images in the cooking stage to which the food image belongs, and dynamically adjust the importance score of the food image in the cooking stage according to the image similarity, thereby obtaining the food image with the highest importance score in each of the cooking stages as the optimal image;

a video generation unit, configured to arrange all the optimal images in chronological order, generating a video file accordingly.

5. The cloud server according to claim 4, **characterized in that** the importance score is calculated iteratively based on the importance score from the previous iteration and weighted average similarity from the previous iteration, wherein the weighted average similarity is a weighted average of the image similarities between the food image and the other food images in the cooking stage to which the food image belongs, with the importance score of each of the other food images serving as weight respectively.

6. The cloud server according to claim 5, **characterized by** further comprising an image quality calculation unit, configured to calculate an image quality score based on image definition and color saturation, and to adjust the importance score of the corresponding food image obtained in each iteration by using the image quality score.

7. The cloud server according to claim 4, **characterized by** further comprising an information feedback unit, configured for feeding back information on food ripeness to an air fryer according to the cooking stage of the food images.

8. The cloud server according to claim 4, **characterized by** further comprising a food information unit, configured for identifying the type of the food being cooked according to the food images, calculating the food weight by using a volume projection algorithm, then sending the obtained data to the air fryer.

9. The cloud server according to claim 4, **characterized by** further comprising a terminal communication unit, configured for sending the generated video file to a mobile terminal.

10. A cooking system, **characterized by** comprising the air fryer according to any one of claims 1 -2 and the cloud server according to any one of claims 3 - 9.

11. The cooking system according to claim 10, **characterized in that** the main control board is configured to obtain the food ripeness information sent by the cloud server, and determine whether to end the cooking process based on the received information.

12. The cooking system according to claim 10, **characterized in that** the main control board is configured to obtain the data of the food type and the food weight sent by the cloud server, and set a menu category, as well as recommended cooking time and cooking temperature according to the data obtained, then display the menu category, the recommended cooking time and the cooking temperature through a display screen arranged on the surface of the main body.

13. A mobile terminal, **characterized in that** the mobile terminal is configured for obtaining the video file sent by the cloud server according to any one of claims 3 - 9, and playing and/or sharing the video file.

14. The mobile terminal according to claim 13, **characterized in that** the mobile terminal is further configured for performing at least one of operations including editing the title, inserting text, and inserting background music on the received video file.

15. The mobile terminal according to claim 13, **characterized in that** the mobile terminal is connected to the camera assembly sequentially through the cloud server and the main control board, and is used for viewing the cooking state of the food in the cooking cavity in real time.

Air Fryer

Cloud Server

```
┌─────────────────┐                    ┌─────────────────┐
│                 │                    │                 │
│    Cooking      │──────────────────▶ │ Image preprocessing │
│                 │                    │                 │
└────────┬────────┘                    └────────┬────────┘
         │                                      │
         ▼                                      ▼
┌─────────────────┐                    ┌─────────────────┐
│  Capture images at │                 │ Extract images with the │
│  intervals and upload │──────────────│ highest importance in │
│                 │                    │ each cooking stage │
└─────────────────┘                    └────────┬────────┘
                                                │
                                                ▼
                                       ┌─────────────────┐
                                       │                 │
                                       │  Generate video │
                                       │                 │
                                       └─────────────────┘
```

FIG. 1

Construct a classification model to judge the ripeness state of food in the collected food images and obtain the cooking stage of the food images

Respectively calculate the image similarity between each food image and other food images in the cooking stage to which the food image belongs, and dynamically adjust the importance weight of the food image in the cooking stage according to the image similarity

Obtain the food image with the highest importance weight in each cooking stage as the optimal image

Arrange all the optimal images in chronological order and generate a video file accordingly

FIG. 2

nitialize image importance score
score(i)(0)

Calculate image similarity
similarity(i,j)

Calculate weighted similarity
weighted_similarity(i,j)

No

j=j+1; j=N?

Yes

Update image importance score
score(i)(t)

No

i=i+1;
meet the set conditions?

Yes

Output final importance score

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024118587131